# EUROPEAN PATENT SPECIFICATION

(11) **EP 3 180 975 B1**
(45) Date of publication and mention of the grant of the patent: **12.12.2018**
(21) Application number: 16192367.7
(22) Date of filing: 05.10.2016
(51) Int. Cl.: A01D 78/10

(54) **HEIGHT ADJUSTMENT OF ROTATABLE AGRICULTURAL IMPLEMENT**
HÖHENVERSTELLUNG EINES DREHBAREN LANDWIRTSCHAFTLICHEN GERÄTS
RÉGLAGE DE LA HAUTEUR D'OUTIL AGRICOLE ROTATIF

(30) Priority: 16.12.2015 GB 201522213
(43) Date of publication of application: 21.06.2017
(73) Proprietor: AGCO International GmbH, 8212 Neuhausen am Rheinfall (CH)
(72) Inventor: Breu, Wolfgang, 87616 Marktoberdorf (DE)
(74) Representative: AGCO Intellectual Property Department

(56) References cited:
- DE-A1-102010 010 861
- US-A1- 2004 148 917

## Description

This invention relates to a rotatable agricultural implement which is towed by a tractor. More specifically, the invention relates to a towed rotatable agricultural implement provided with ground engaging wheels.

Agricultural rakes generally comprise a frame, ground engaging wheels for supporting the frame on the ground and at least one rotor which is driven about a rotor axis. In case of a rotary rake, the rotor axle may be vertical but there are other types of rakes provided with belt mergers or side-delivery rakes in which the rotor axis extends horizontally. In use, the frame is attached to the rear of an agricultural tractor by means of a drawbar and towing hitch for example. The frame comprises a main body which extends longitudinally and in the direction of travel of the tractor. The frame is provided with at least one rotor arm which in a working position extends from the main body transverse to the direction of travel. The rotor is located at the end of the rotor arm. When the rake is not in a working position, the rotor arm may be moved into a transport position in which the rotor is raised and brought closer to the body.

Each rotor comprises a hub and a plurality of tine arms extending tangentially from the hub for raking or windrowing cut forage material or grass lying on the ground. Each rotor is equipped with a rotational drive to rotate the rakes. The drive may comprise a hydraulic motor located in each rotor. Alternatively, each rotor may be connected to a cardan shaft driveline which is driven by the PTO (power take off) of the tractor.

Each rotor is provided with at least one ground engaging wheel which when in use supports the rotor at a defined height above the ground. It is important that the tines do not come into contact with the ground otherwise there is a risk that the grass or forage material will become contaminated.

It is known to provide each rotor with a height adjustment means which may be hydraulically or electrically activated to adjust the distance between the rotor and the ground.

Such adjustment means is manually adjustable by the driver observing when the tines come into contact with the ground. This is awkward to observe since the rake is towed behind the driver and as a result cannot be done accurately.

An example of a known rake device is provided in DE-A-102010010861.

It is an aim of the invention to provide a means for controlling the height of the rotor of a towed agricultural implement when in use which is accurate and does not inconvenience the driver.

According to the invention there is provided an agricultural implement comprising at least two rotors which are adjustable in height relative to ground, said at least two rotors driven by a respective electric motor controlled by a control system, characterised in that the control system is arranged to measure and compare the motor current values of each motor for rotating a respective rotor under the same operating conditions and when there is a discrepancy between the current values, the control system is arranged to adjust the height of one or both rotors until the motor current values are the same.

If the control system determines that the current values are not the same, it is indicative that the rotors are not arranged at the same height above the ground and the control system may be arranged to warn the driver. If the rotor or part of a rotor comes into contact with the ground, the resistance to rotation of the rotor increases and an increase in the rotor's motor current is detected by the control system. As a result, the height of the rotor above the ground may be increased by the control system so that the rotor or part of the rotor is no longer in contact with the ground.

Preferably, the motor current values for two or more rotors rotating under the same operating conditions are compared by the control system and where there is a discrepancy a driver waning is given by the control system.

Preferably, the agricultural implement is a rake.

More preferably, if the current consumed by at least one motor exceeds a known current value for a given operating condition, the control system is arranged to increase the height of the rotor above the ground. The known current values may be stored in the control system.

The invention will now be described, by way of example only, with reference to the following drawings in which :
Figure 1 is a perspective view of an agricultural rake in accordance with the invention, and
Figures 2a and 2b are side views of an agricultural rake attached to a tractor and detached respectively in accordance with the invention.

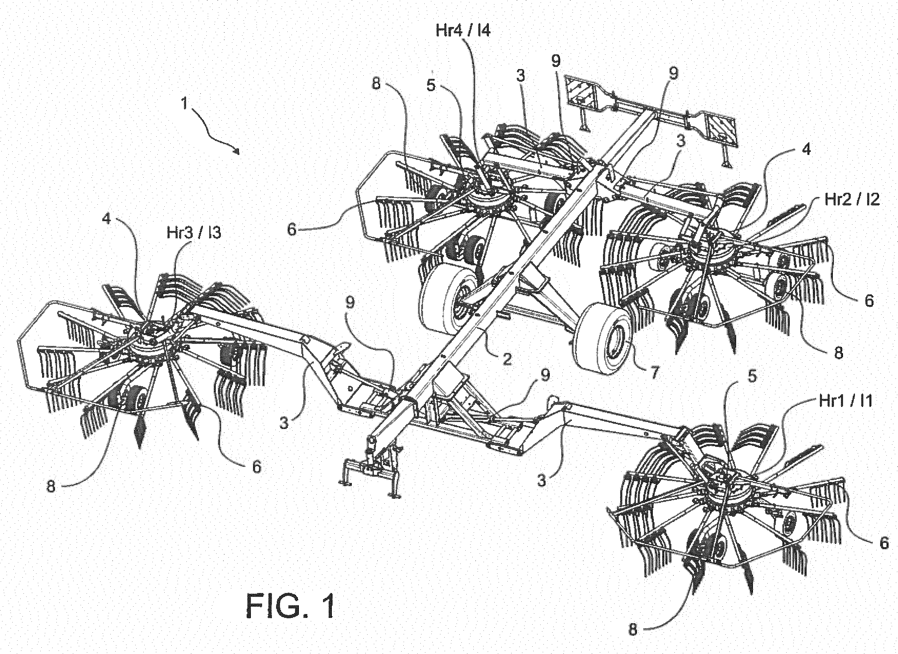

Figure 1 is a perspective view of a rake 1 attachable to a tractor (not shown) for towing. In figure 1, the rake is in a working position ready to rake grass or forage material. Typically the rake 1 is attached to a three point hitch at the rear of a tractor. The rake 1 comprises a main body 2 which extends longitudinally along the direction of travel of the tractor. An end of the main body 2 is attachable to a tractor. In use, two pairs of rotor arms 3 extend transverse to the longitudinal axis of the main body 2. At the end of each rotor arm 3, a rotor 4 is provided. Each rotor 4 comprises a hub 5 and a plurality of tine arms 6 extending tangentially from the hub for raking cut grass lying on the ground. Main body 2 is supported by body wheels 7 which engage with the ground when the rakes are not working. Each rotor 4 is also provided with ground engaging wheels 8 which engage the ground when the rakes are working

For transport on the road, rotor arms 3 may be pivoted by hydraulic cylinders 9 about an axis which is parallel to the longitudinal axis of the main body 2 so that the rotor arms 3 are in a substantially vertical position in a transport position. Further complex movements of the rotor arm 3 may be necessary to achieve a minimum overall width.

To work the rakes, rotor arms 3 are lowered from the transport position to the working position so that the ground engaging wheels 8 come into contact with the ground. Thereby the body wheels 7 are lifted off the ground with enough distance to avoid the body wheels 7 coming into contact with forage material or grass lying on the ground.

Ground engaging wheels 8 are attached to a rod (not shown) of a respective rotor 4. The rod slides along the rotational axis of rotor 4 in a substantially vertical movement during rake operation to enable the height of the rotors 4 to be adjusted. The rod may be moved by hydraulic pressure, or by an electric spindle drive having a sensor as is known in the art. Alternatively, ground engaging wheels 8 may be connected to a rotor 4 by a linkage mechanism which is pivoted by a respective hydraulic cylinder, or an electric spindle drive for height adjustment of the rotors 4.

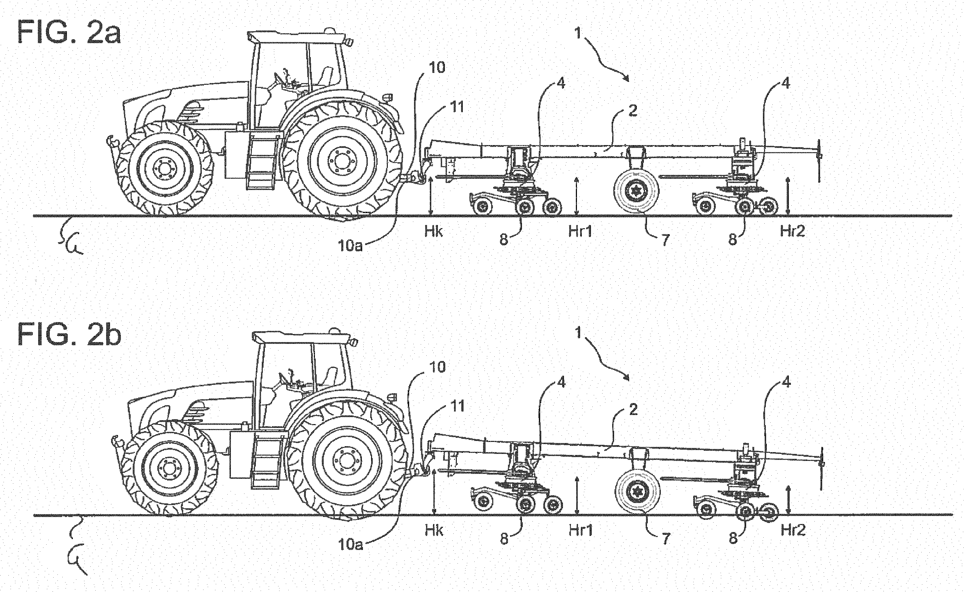

In Figure 1, each hub is provided with an electric motor, so that the rotation of each rotor can be controlled individually of the others and enables each rotor to be driven at a range of rotational speeds. By monitoring the torque of each rotor, contact of the tines with the ground can be detected, since the torque will increase when the tines come into contact with the ground and the resistance to rotation increases. The torque can be determined by measuring the current supplied to each electric motor of each rotor 4 via a DC/AC inverter and the current can be controlled by a control system on the tractor or on the rake. By knowing the characteristics of the working of the rotor motor (described later), which includes the current consumption, a control system on a tractor can detect when there is an increase in current indicating that the tines have come into contact with the ground. When this happens the rotor arm 3 can be raised so that the tines are no longer in contact with the ground. Figures 2a and 2b show the height of the rotors Hr above the ground G. As shown in figure 1, Hr1 and Hr3 indicate the height of the front rotors above the ground, Hr 2 and Hr4 indicate the height of the rear rotors above the ground. Linkage height Hk indicates the height at which the rake 1 is attached to the tractor by a linkage such as a three point hitch 10. Height Hk may be detected by position sensors on the lower links 10a of the three point linkage 10, or by any other sensor referring to a coupling point 11 of the rake 1. In figure 2a, the rake 1 is attached correctly to a three point hitch such that the heights of the front rotors Hr1, Hr3 are the same as the heights of the rear rotors Hr2, Hr4. In figure 2b rake 1 is attached incorrectly to the three point hitch 10 so that the height Hr1, Hr3 of the front rotors are higher than the height Hr2, Hr4 of the rear rotors.

For each electric motor, a characteristic map is stored on the control system which defines a range of current I which is indicative of an optimum rotation of the rotor 4 when it rotates freely within the crop without the rotor or part thereof coming into contact with the ground. Such a characteristic map may store information relating to the frequency, or speed of rotation of the rotor and the height of the rotor Hr above the ground. It is important that the rotor or part thereof (such as a tine on the rotor) does not come into contact with the ground and only contacts the crop, grass or forage material which it is working. If the rotor or part thereof comes into contact with the ground, there is a risk that the crop, grass or forage which is being worked will be contaminated with the soil, debris and stones of the ground. The height of a rotor Hr can be detected using sensors located on the rotor arm 3 or the rotor 4. In addition, crop information relating to the type of crop, for example, whether it is grass or forage material, can be stored in the control system as well as its condition, for example, whether it is wet or dry. These parameters may affect the current required by a motor for a rotor to rotate at a given speed or frequency. Such crop information can be inputted into the system by the driver, or sensed by sensors on the rake 1.

If the measured range of current I for a rotor motor operating at a known speed for a crop of a known profile does not coincide with that of a value or values taken from characteristic map stored on the control system, the control system may react by creating a warning signal and recommending the driver to adjust the settings of the linkage 10 and/or adjust the height of the rotor Hr until the stored value or range of current I is attained.

By comparing the motor current of each rotor whilst rotating two or more rotors at the same speed or frequency, any differences of height Hr between each rotor can be highlighted. The height Hr of any two rotors can thus be compared and if there is a discrepancy between the current I required, the height Hr setting of one or both rotors 4 may be adjusted so that the height of each rotor on the rake 1 is balanced or at a desired position. It is very common that the speed of the front rakes is higher than the speed of the rear rakes.

If height Hr of each rotor is the same and during use of the rake, the speed of the each rotor is the same, any difference in the current I detected by the control system indicates that a malfunction, or damage may have occurred. In such a case, a warning signal is given to the driver.

When coupling rake 1 to a tractor for use, the height of the front rotors Hr1, Hr3 and the rear rotors Hr2, Hr4 can be compared by comparing the electric current I values of each rotor motor. A discrepancy between the current I values of each rotor would indicate that the rake 1 is coupled too high to the tractor having the consequence that the front rotors are raised with respect to the rear rotors as shown in fig 2b. Lowering of the lower links 10a until the current I values of each of the rotors are the same would then indicate that the height of the front rotors Hr1, Hr3 are the same as the height of the rear rotors Hr2, Hr4 and the rake 1 is correctly coupled.

In the embodiment shown in figure 1, each rotor 4 is assigned a height Hr1, Hr2, Hr3 and Hr4 and each rotor has a motor having a current I1, I2, I3 and I4 which can be measured. The control system can detect an incorrect rotor height Hr by using two different methods:
In a first method, the motor current I of one rotor is compared with a predetermined stored motor current I or range of motor rotor current I indicative of a correct height setting to detect whether a rotor is in a correct position or not.
In a second method, the motor current I of two or more rotors 4 are compared to detect whether there is a difference in rotor height between the two or more rotors.

The balancing of rotor heights Hr can be conducted for rotors arranged along the same longitudinal direction of the frame, for example motor current values I1 and I2 of the front and rear rotors on the left of the rake as viewed in the forward direction of travel can be compared and motor current values I3 and I4 on the right side of the rake can be compared. The balancing of rotor heights Hr can also be conducted for rotors arranged along the same direction transverse to the longitudinal axis of the frame, for example, motor current values of I1 and I3 of the front rotors can be compared and motor current values I2 and I4 of the rear rotors can be compared.

In the embodiment shown, a rotary rake with a vertical rotor axis is described, however the invention is also applicable to other types of rakes, such as belt mergers or side-delivery rakes in which the rotor axis extend horizontally without leaving the scope of the invention.

In addition, the invention may also be applied to other types of agricultural implements, such as, loader pick-ups or tedders.

## Claims

1. An agricultural implement (1) comprising at least two rotors (4) which are adjustable in height relative to ground, said at least two rotors (4) driven by a respective electric motor (5) controlled by a control system, **characterised in that** the control system is arranged to measure and compare the motor current values of any two motors (5) for rotating the respective rotors (4) under the same operating conditions and when there is a discrepancy between the current values, the control system is arranged to adjust the height (Hr) of one or both rotors (4) until the motor current values are the same.

2. An agricultural implement as claimed in claim 1 wherein the control system is arranged to compare the motor current values for two or more rotors (4) rotating under the same operating conditions and when there is a discrepancy between the current values the control system is arranged to give a driver warning.

3. An agricultural implement as claimed in claim 1 or claim 2 wherein the control system is arranged to compare the measured motor current value of one motor (5) with the motor current value of another motor (5).

4. An agricultural implement as claimed in claim 1 or claim 2 wherein if the measured current values exceed known current values for a given operating condition, the control system is arranged to increase the height (Hr) of the respective rotor (4) above the ground.

5. An agricultural implement as claimed in any preceding claim wherein the implement is a rake.

## Patentansprüche

1. Landwirtschaftliches Anbaugerät (1), mit mindestens zwei Rotoren (4), die höhenverstellbar zum Boden sind, wobei die mindestens zwei Rotoren (4) durch einen entsprechenden Elektromotor (5) angetrieben sind, der durch ein Steuer-/Regelsystem gesteuert/geregelt ist, **dadurch gekennzeichnet, dass** das Steuer-/Regelsystem angeordnet ist, um die Motorstromwerte jedes der Motoren (5) zum Rotieren des entsprechenden Rotors (4) bei den selben Betriebsbedingungen zu messen und zu vergleichen und, wenn, ein Unterschied zwischen den gegenwärtigen Werten existiert, das Steuer-/Regelsystem angeordnet ist, um die Höhe (Hr) eines Rotors (4) oder beider Rotoren (4) einzustellen, bis die Motorstromwerte übereinstimmen.

2. Landwirtschaftliches Anbaugerät nach Anspruch 1, wobei das Steuer-/Regelsystem angeordnet ist, um die Motorstromwerte von zwei oder mehr Rotoren (4), die bei den selben Betriebsbedingungen rotieren, zu vergleichen und, wenn ein Unterschied zwischen den gegenwärtigen Werten existiert, das Steuer-/Regelsystem angeordnet ist, um eine Fahrerwarnung auszugeben.

3. Landwirtschaftliches Anbaugerät nach Anspruch 1 oder 2, wobei das Steuer-/Regelsystem angeordnet ist, um den gemessenen Motorstromwert eines der Motoren (5) mit dem Motorstromwert eines anderen Motors (5) zu vergleichen.

4. Landwirtschaftliches Anbaugerät nach Anspruch 1 oder 2, wobei, falls die gemessenen Werte bekannte Werte einer vorgegebenen Betriebsbedingung überschreiten, das Steuer-/Regelsystem angeordnet ist, um die Höhe (Hr) des entsprechenden Rotors (4) über dem Boden zu erhöhen.

5. Landwirtschaftliches Anbaugerät nach einem der vorhergehenden Ansprüche, wobei das Anbaugerät eine Harke ist.

## Revendications

1. Outil agricole (1) comprenant au moins deux rotors (4) qui sont ajustables en hauteur par rapport au sol, lesdits au moins deux rotors (4) étant entraînés par un moteur électrique (5) respectif commandé par un système de commande, **caractérisé en ce que** le système de commande est agencé pour mesurer et comparer les valeurs actuelles de moteur des deux moteurs (5) pour la rotation des rotors (4) respectifs dans les mêmes conditions de fonctionnement et lorsqu'il y a un écart entre les valeurs actuelles, le système de commande est agencé pour ajuster la hauteur (Hr) d'un ou des deux rotors (4) jusqu'à ce que les valeurs actuelles de moteur soient les mêmes.

2. Outil agricole selon la revendication 1, dans lequel le système de commande est agencé pour comparer les valeurs actuelles de moteur pour deux rotors (4) ou plus tournant dans les mêmes conditions de fonctionnement et lorsqu'il y a un écart entre les valeurs actuelles le système de commande est agencé pour donner un avertissement conducteur.

3. Outil agricole selon la revendication 1 ou 2, dans lequel le système de commande est agencé pour comparer la valeur actuelle de moteur mesurée d'un moteur (5) avec la valeur actuelle de moteur d'un autre moteur (5).

4. Outil agricole selon la revendication 1 ou 2, dans lequel si les valeurs actuelles mesurées excèdent des valeurs actuelles connues pour une condition de fonctionnement donnée, le système de commande est agencé pour augmenter la hauteur (Hr) du rotor (4) respectif au-dessus du sol.

5. Outil agricole selon une quelconque revendication précédente, dans lequel l'outil est un râteau.
